# EUROPÄISCHE PATENTSCHRIFT

(11) **EP 2 183 293 B1**
(45) Veröffentlichungstag und Bekanntmachung des Hinweises auf die Patenterteilung: **09.09.2015**
(21) Anmeldenummer: 08801212.5
(22) Anmeldetag: 26.08.2008
(51) Int. Cl.: C08G 18/08, C08G 18/12, C09D 5/20

(54) **BESCHICHTUNGSZUSAMMENSETZUNG FÜR DIE HERSTELLUNG VON FLÜSSIGFOLIEN**
COATING COMPOSITION FOR PRODUCING LIQUID FILMS
COMPOSITION DE REVÊTEMENT POUR LA PRODUCTION DE PELLICULES LIQUIDES

(30) Priorität: 28.08.2007 DE 102007040756
(43) Veröffentlichungstag der Anmeldung: 12.05.2010
(73) Patentinhaber: Mankiewicz Gebr. & Co. GmbH & Co KG, 21107 Hamburg (DE)
(72) Erfinder: OSSENKOPF, Andreas, 21629 Neu Wulmsdorf (DE); TÖDTER, Lars, 21258 Heidenau (DE); GILDENHORN, Victor, 22089 Hamburg (DE); MARTIN, Annett, 21629 Neu Wulmsdorf (DE)
(86) Internationale Anmeldenummer: PCT/DE2008/001389
(87) Internationale Veröffentlichungsnummer: WO 2009/026894

(56) Entgegenhaltungen:
- EP-A- 1 669 382
- WO-A-02/42348
- WO-A-98/38230
- DE-A- 10 011 277
- US-A- 5 086 110

## Beschreibung

Die Erfindung betrifft eine Polyurethandispersion, ein Verfahren zu ihrer Herstellung und ihre Verwendung zur Herstellung von Flüssigfolien auf lackierten Oberflächen.

Üblicherweise werden lackierte Kraftfahrzeugteile nach der Produktion mit einem Oberflächenschutz versehen, der den Decklack vor Beschädigungen während der weiteren Montage oder des Transports schützen soll. Dieser Oberflächenschutz wird anschließend wieder entfernt. Bekannt sind hierfür Wachsbeschichtungen, welche mit Lösungsmitteln entfernt werden müssen. Der hohe Verbrauch an Lösemitteln ist jedoch nachteilig. Ein weiteres übliches Verfahren ist die Verwendung von Folien, welche zugeschnitten und per Hand auf die lackierten Teile aufgeklebt werden müssen. Der Nachteil an diesem Verfahren ist der hohe Arbeitsaufwand und die damit verbundenen Kosten.

Aus DE 196 52 728 ist ein Verfahren zum Herstellen einer entfernbaren Beschichtung für lackierte Kraftfahrzeugteile bekannt, das die oben geschilderten Nachteile vermeidet, indem eine wässrige Dispersion auf die lackierten Teile aufgebracht wird und die Dispersion unter Ausbildung einer abziehbaren Folie verfestigt wird. Nachteilig an diesem Verfahren ist, dass die Flüssigkeit weder kantengenau noch overspray-frei appliziert werden kann, so dass zur vollständigen Entfernung der Folie eine Nachbehandlung notwendig ist.

Aus DE 196 53 585 A1 und DE 100 11 277 A1 sind Abziehfolien bekannt, welche aus wässrigen, anionischen Dispersionen von Polyurethanharnstoffen bestehen, deren Festkörper das zumindest teilweise in der Salzform vorliegende Umsetzungsprodukt aus NCO-Prepolymeren, Kettenreglern, Wasser und Neutralisationsmitteln enthält. Das NCO-Prepolymere wird dabei erhalten aus aliphatischen und/oder cycloaliphatischen Diisocyanaten, Makrodiolen mit einem Molekulargewicht von 500 bis 10000, 2,2-Bis-(hydroxymethyl)-alkan-monocarbonsäuren, bevorzugt Dimethylpropionsäure, und kurzkettigen Diolen mit einem Molekulargewicht von 62 bis 400.

Auch diese Beschichtungen können nicht im gewünschten Maß kantengenau und overspray-frei appliziert werden.

Um eine overspray-freie Applikation zu erreichen, ist aus DE 10 2004 018 597 B3 die Verwendung einer Multistrahldüse mit mehreren Austrittsöffnungen bekannt. Nachteil dieses Verfahrens sind Spritzer beim An- und Abschalten der Düse, welche ausgefranste Kanten und Verunreinigungen über den zu beschichtenden Bereich hinaus verursachen.

So führen die am Beginn der Applikation auftretenden Druckstöße dazu, dass das Beschichtungsmaterial oder die Beschichtungszusammensetzung mit unerwünschter Geschwindigkeit aus der Düse ausgetragen wird und nach dem Auftreffen auf die zu beschichtende Oberfläche zurückspritzt. Die herumfliegenden Materialtröpfchen verunreinigen als Spritzer die Oberfläche außerhalb des vorgegebenen Bereichs. Darüber hinaus kann beim Auftreffen des Materials auf die zu beschichtende Fläche Luft in den applizierten Film eingeschlossen werden und zu Filmdefekten wie beispielsweise Schaum und Blasen führen. Am Ende der Applikation wird durch den Druckabfall die Geschwindigkeit des aus der Düse ausgetragenen Materials geringer. Deshalb fliegt beim Beenden der Applikation das aus der Düse ausgetragene Material weiter in Vorschübrichtung der Applikationsvorrichtung als während der Applikation. Das führt vor allem bei hoher Vorschubgeschwindigkeit zu Verunreinigungen, insbesondere in Form von ausgefransten Kanten und Spritzern über den vorgegebenen Bereich hinaus.

Spritzer müssen nach dem Trocknen bzw. Aushärten der Folie einzeln per Hand entfernt werden. Ausgefranste Kanten erschweren das Abziehen der Folie, insbesondere den Anfang.

Daher ist es Aufgabe der vorliegenden Erfindung, eine verbesserte Flüssigfolie sowie ein verbessertes Verfahren zur Herstellung der Flüssigfolie auf einer Oberfläche zur Verfügung zu stellen, welche die Nachteile des Stands der Technik überwinden.

Die Aufgabe wird in einem ersten Aspekt gelöst durch eine Beschichtungszusammensetzung, welche hergestellt wird aus einer oder mehreren Polyurethandispersionen, bevorzugt wässrigen Polyurethandispersionen, mittels Zugabe eines Neutralisierungsmittels in Mengen von 0,01 bis 0,3 mol, bevorzugt 0,02 bis 0,2 mol, besonders bevorzugt 0,025 bis 0,15 mol, bezogen auf die basischen Gruppen des Neutralisierungsmittels pro kg Gesamtformulierung und anschließendem langsamen Rühren bei einer Temperatur zwischen 10 und 30 °C, bevorzugt 15 und 28 °C, besonders bevorzugt 18 und 25 °C, über einen Zeitraum von 5 bis 35 Tagen, bevorzugt 8 bis 30 Tagen, besonders bevorzugt 10 bis 25 Tagen, wobei mindestens eine der Polyurethandispersionen
- erhalten wird aus der Polymerisierung von NCO-Prepolymeren enthaltend Umsetzungsprodukte aus aliphatischen und/oder cycloaliphatischen Diisocyanaten, Makrodiolen mit einem Molekulargewicht von 500 bis 10000, 2,2-Bis-(hydroxymethyl)-alkan-carbonsäuren und kurzkettigen Diolen mit einem Molekulargewicht von 62 bis 400 und
- einen Neutralisationsgrad im Bereich von 35 bis 65 % bezogen auf alle H-aciden Gruppen der Polyurethandispersion,
- einen Festkörpergehalt im Bereich von 30 bis 50 Gew.-% bezogen auf das Gesamtgewicht der Polyurethandispersion,
- einen pH-Wert im Bereich von 7,1 bis 9,0,
- eine mittlere Molmasse im Bereich von 20000 bis 58000 g/mol sowie
- eine polymodale Teilchengrößenverteilung mit mindestens einem Anteil im Bereich von 50 bis 150 nm, mindestens einem Anteil im Bereich von 250 bis 600 nm und/oder mindestens einem Anteil im Bereich von 1000 bis 3000 nm aufweist.

Die erfindungsgemäße Beschichtungszusammensetzung weist dabei ein viskoelastisches Verhalten auf, wobei im Deformationsbereich zwischen γ = 0,05 und γ = 1 die Materialfunktionen des Elastizitätsmoduls G' und des Verlustmoduls G" eine im wesentlichen konstante Steigung aufweisen und im Deformationsbereich γ > 2 die Materialfunktionen G1 und G" µm einen Faktor im Bereich von 2 bis 8 höher liegen als die mit konstanter steigung der Materialfunktionen G' und G" aus dem Deformationsbereich zwischen γ = 0,05 und γ = 1 in den Deformationsbereich γ > 2 extrapolierten Materialfunktionen G' und G". Weiterhin weist die erfindungsgemäße Beschichtungszusammensetzung im Deformationsbereich zwischen γ = 0,001 und γ = 0,01 einen linear viskoelastischen Bereich, in welchem die Materialfunktion des Elastizitätsmoduls G' doppelt so große Werte aufweist wie die Materialfunktion des Verlustmoduls G", und im Deformationsbereich zwischen γ = 0,05 und γ = 0,5 einen nicht linear viskoelastischen Bereich auf, in welchem sich die Materialfunktionen G' und G" in einem Bereich zwischen 50 bis 500 Pa schneiden. Bevorzugte Ausführungsformen sind Gegenstand der Unteransprüche oder der Beschreibung.

An entfernbare, insbesondere abziehbare, Folien werden besonders hohe Anforderungen gestellt. So muss sich die Folie leicht von der zu schützenden Oberfläche ablösen lassen, vor allem am Anfang. Auch muss sich die Folie über den gesamten Bereich rückstandsfrei abziehen lassen. Neben der gleichmäßigen Schichtdicke sind hierfür exakte, nicht ausgefranste Kanten und eine zusammenhängende Fläche ohne Spritzer der Beschichtung bzw. Folie ausschlaggebend. Alle bisher unter Verwendung von üblichen Polymerdispersionen hergestellten Flüssigfolien, zeigen nicht in allen relevanten Punkten gute Ergebnisse.

Überraschenderweise wurde nun gefunden, dass die erfindungsgemäßen Beschichtungszusammensetzungen ein rheologisches Verhalten aufweisen, welche eine kantengehaue, overspray- und spritzerfreie Applikation ermöglicht. Mit den erfindungsgemäßen Beschichtungszusammensetzungen werden Folien erhalten, die sich leicht und vollständig von der beschichteten Oberfläche abziehen lassen. Eine Nachbehandlung ist nicht mehr notwendig.

Die Scherviskosität der erfindungsgemäßen Beschichtungszusammensetzungen liegt bei der Scherrate D = 0,1 1/s im Bereich zwischen 5 und 500 Pa*s, bevorzugt zwischen 100 und 200 Pa*s, beispielsweise zwischen 115 bis 140 Pa*s, bei D = 1 1/s im Bereich zwischen 5 und 100 Pa*s, bevorzugt zwischen 10 und 40 Pa*s, beispielsweise zwischen 21 und 25 Pa*s, bei D = 10 1/s im Bereich zwischen 1 und 50 Pa*s, bevorzugt zwischen 1 und 20 Pa*s, beispielsweise zwischen 4,2 und 5,1 Pa*s und bei D = 100 1/s im Bereich zwischen 0,1 und 5 Pa*s, bevorzugt zwischen 0,5 und 2,5 Pa*s, beispielsweise zwischen 1,3 und 1,5 Pa*s.

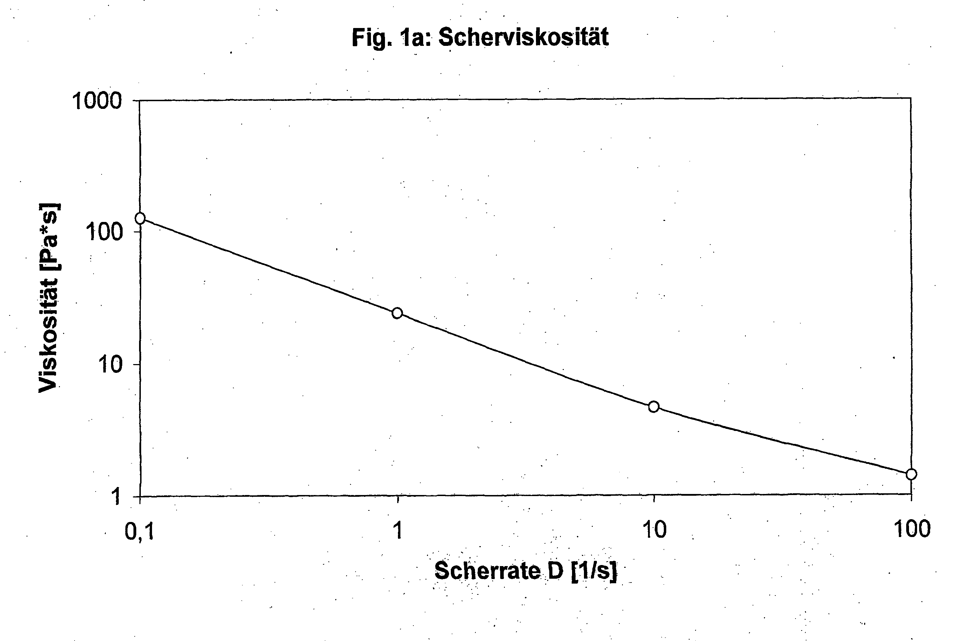

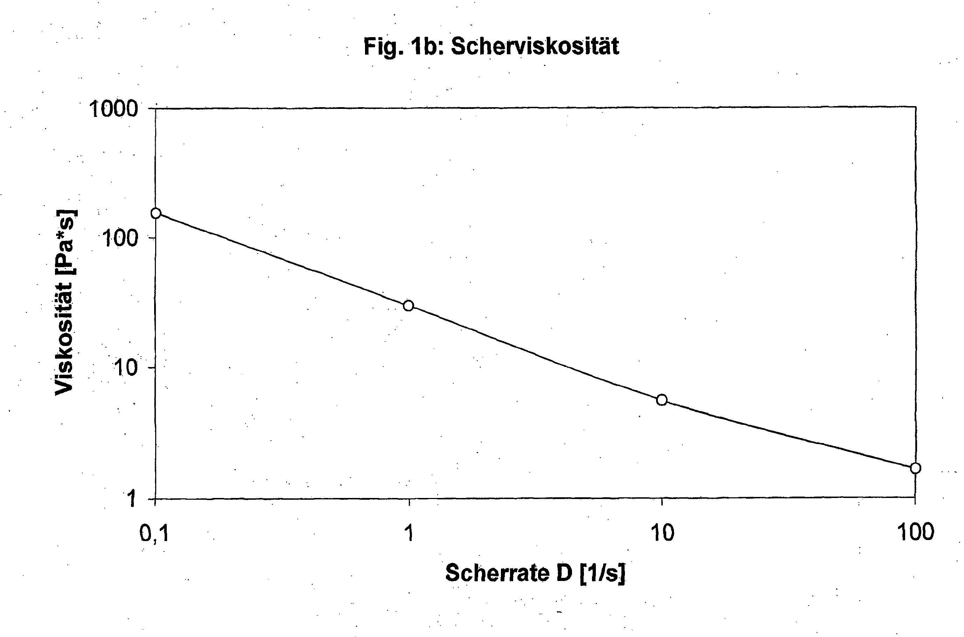

Fig. 1a und Fig. 1b zeigen beispielhaft den Verlauf der Viskosität η einer erfindungsgemäßen Beschichtungszusammensetzung in Abhängigkeit von der Scherrate D.

Der von der Auslenkung γ abhängige Elastizitätsmodul G' und der Verlustmodul G" werden im Folgenden als die Materialfunktionen G' = f (y) und G" = f (y) betrachtet.

Der Deformationsbereich, in dem die Materialfunktionen G' und G" ein deformationsunabhängiges Verhalten (Steigung ist gleich Null) zeigen, wird üblicherweise als "linear viskoelastischer Bereich (LVB)" bezeichnet. Deformationsbereiche, in denen die Materialfunktionen G' und G" deformationsabhängiges Verhalten zeigen, werden allgemein als "nicht linear viskoelastische Bereiche (NLVB)" bezeichnet.

Die erfindungsgemäßen Beschichtungszusammsetzungen weisen im Deformationsbereich zwischen γ = 0,001 und γ = 0,01 einen linear viskoelastischen Bereich auf, in welchem der Elastizitätsmodul G' doppelt so groß ist wie der Verlustmodul G" und der Verlustmodul G" zwischen 100 und 400 Pa liegt. Unterhalb von 100 Pa sind die erfindungsgemäßen Polyurethandispersionen zu dünnflüssig, um einen spritzerfreien Auftrag zu ermöglichen; oberhalb von 400 Pa sind sie gelförmig, so dass sie nicht mehr in den erfindungsgemäßen Verfahren verarbeitet werden können.

Weiterhin weisen die erfindungsgemäßen Beschichtungszusammensetzungen im Bereich zwischen γ = 0,05 und γ = 0,5 einen nicht linear viskoelastischen Bereich auf, in welchem sich der Elastizitätsmodul G' und der Verlustmodul G" in einem Bereich zwischen 50 bis 500 Pa schneiden. Im Deformationsbereich zwischen γ = 0,05 und γ =1 weisen die Materialfunktionen des Elastizitätsmoduls G' und des Verlustmoduls G" eine im wesentlichen konstante Steigung auf und im Deformationsbereich γ > 2 liegen die Materialfunktionen G' und G" um einen Faktor im Bereich von 2 bis 8 höher als die mit konstanter Steigung der Materialfunktionen G' und G" aus dem Deformationsbereich zwischen γ = 0,05 und γ = 1 in den Deformationsbereich γ > 2 extrapolierten Materialfunktionen G' und G".

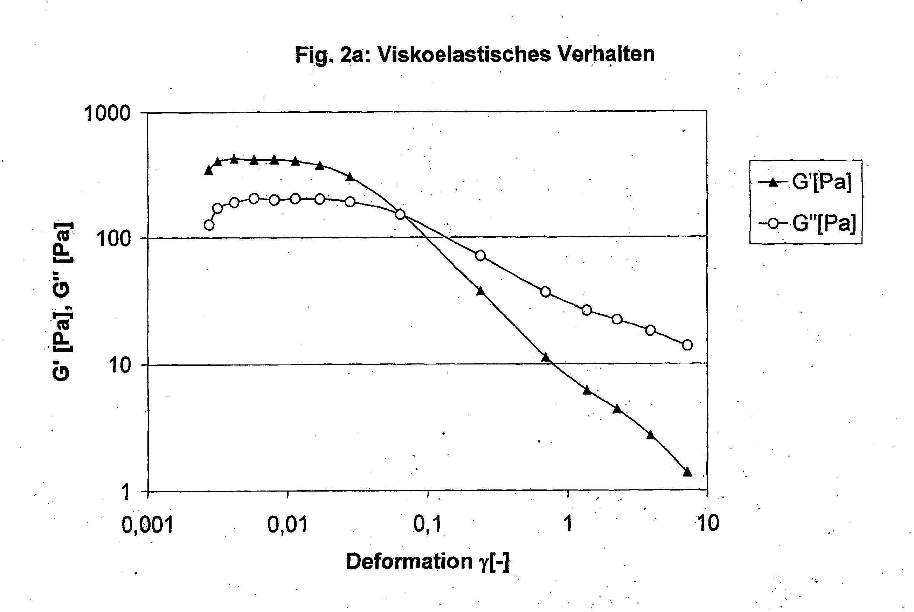

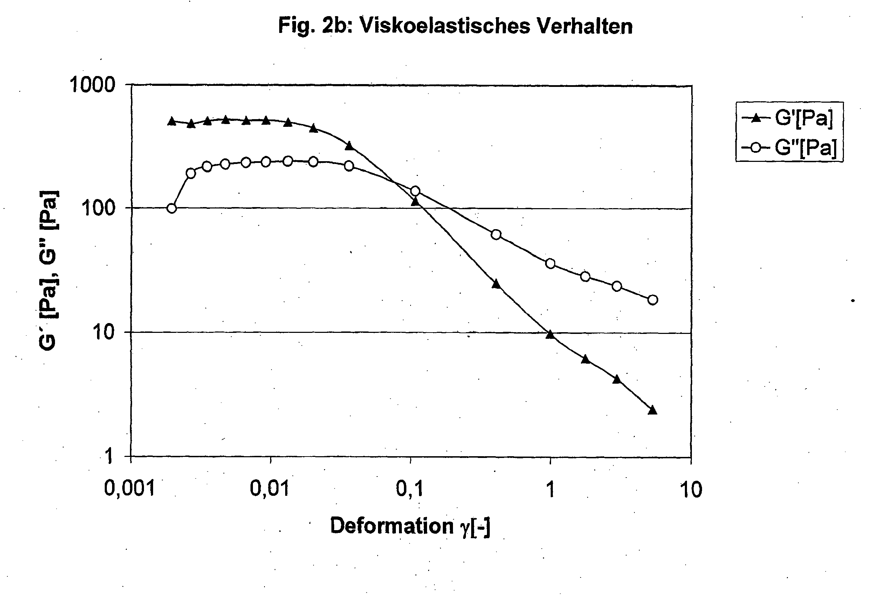

Fig. 2a und Fig. 2b zeigen beispielhaft den Verlauf des Elastizitätsmoduls G' und des Verlustmoduls G" einer erfindungsgemäßen Beschichtungszusammensetzung in Abhängigkeit von der Auslenkung γ.

Erfindungsgemäß bevorzugt werden Polyurethandispersionen eingesetzt, welche durch Polymerisation von NCO-Prepolymeren erhalten werden, wobei das oder die Prepolymere Umsetzungsprodukte aus aliphatischen und/oder cycloaliphatischen Diisocyanaten, Makrodiolen mit einem Molekulargewicht von 500 bis 10000, 2,2-Bis-(hydroxymethyl)-alkan-monocarbonsäuren und kurzkettigen Diole mit einem Molekulargewicht von 62 bis 400 enthalten.

Das erfindungsgemäße Neutralisieren der eingesetzten Polyurethandispersionen bewirkt eine Änderung der Ladungsverteilung entlang der Polymerketten. Dadurch verändert sich die räumliche Struktur der Polymermoleküle. Sie können beispielsweise schrumpfen oder sich durch Entfalten vergrößern. Durch die veränderte räumliche Struktur der Polymermoleküle wird auch die Ausbildung der Dispersion beeinflußt, insbesondere die Ausbildung der Polymertröpfchen im Dispersionsmittel. Das rheologische Verhalten der erfindungsgemäßen Beschichtungszusammensetzungen deutet darauf hin, dass sich die Polymertröpfchen der dispergierten Phase durch die erfindungsgemäße Neutralisation wahrscheinlich vergrößern oder stärkere Wechselwirkungen untereinander entwickeln. Auch eine Kombination von Vergrößerung und stärkeren Wechselwirkungen der Polymertröpfchen untereinander ist denkbar.

Die Bestimmung des Neutralisationsgrads der erfindungsgemäßen Beschichtungszusammensetzung ist mit den üblichen Verfahren nicht möglich. Die üblichen Bestimmungsverfahren wie z.B. die Bestimmung nach DIN EN ISO 32 51 basieren auf der Titration einer Lösung. Die Verdünnung der erfindungsgemäßen Beschichtungszusammensetzung zu einer titrierbaren Lösung zerstört jedoch die räumliche Struktur der Dispersion, so dass keine verwertbaren Ergebnisse erhalten werden.

Das rheologische verhalten der erfindungsgemäße Beschichtungszusammensetzungen ist jedoch nicht allein mit dem Neutralisationsgrad erklärbar. Sie hängt auch von der Art der eingesetzten Polyurethandispersionen ab. Polyurethandispersionen werden üblicherweise über ihren Neutralisationsgrad, ihren Festkörpergehalt, ihre mittlere Molmasse und ihren pH-Wert sowie gegebenenfalls über ihre Teilchengrößenverteilungen charakterisiert. Die erfindungsgemäß eingesetzten Polyurethandispersionen weisen einen Neutralisationsgrad von 35 bis 65 %, bevorzugt 40 bis 60 %, besonders bevorzugt 45 bis 55 %, bezogen auf alle H-aciden Gruppen der Dispersion, einen Festkörpergehalt von 30 bis 50 Gew.-%, bevorzugt 35 bis 45 Gew.-%, besonders bevorzugt 37 bis 42 Gew.-%, bezogen auf das Gesamtgewicht der Dispersion, einen pH-Wert zwischen 7,1 und 9,0, bevorzugt 7,5 bis 8,6, besonders bevorzugt 7,8 bis 8,4, und eine mittlere Molmasse von 20000 bis 58000 g/mol, bevorzugt 25000 bis 45000 g/mol, besonders bevorzugt 27000 bis 37000 g/mol, auf.

Darüber hinaus weisen sie eine polymodale Teilchengrößenverteilung auf, wobei mindestens ein Anteil im Bereich von 50 bis 150 nm, bevorzugt 60 bis 130 nm, besonders bevorzugt 80 bis 110 nm, mindestens ein Anteil im Bereich von 250 bis 600 nm, bevorzugt 300 bis 500 nm, besonders bevorzugt 350 bis 450 nm, und/oder mindestens ein Anteil im Bereich von 1000 bis 3000 nm, bevorzugt 1300 bis 2800 nm, besonders bevorzugt 1500 bis 2500 nm, liegt.

Die erfindungsgemäßen Beschichtungszusammensetzungen können bevorzugt zusatzlich ein oder mehrere Rheologieadditive oder Verdicker enthalten, welche nur die Scherviskosität nicht aber die viskoelastischen Eigenschaften der erfindungsgemäßen Beschichtungszusammensetzung beeinflussen. Geeignete Verdicker sind beispielsweise Polyurethanverdicker, pyrogene Kieselsäuren, natürliche oder synthetische Schichtsilikate wie z.B. Montmorillonite, Bentonite oder Hectorite, Polysaccharide wie z.B. modifizierte Stärke oder modifizierte Cellulose insbesondere Celluloseether, und Assoziativ-Verdicker wie z.B. hydrophob modifizierte Polyacrylate, Polyacrylamide, Polyether, Polyvinylpyrolidone. Erfindungsgemäß besonders bevorzugt sind ein oder mehrere Verdicker gewählt aus der Gruppe der Polyurethanverdicker, der Celluloseether und der anorganischen Verdicker insbesondere pyrogene Kieselsäuren und Schichtsilikate.

Die erfindungsgemäße Beschichtungszusammensetzung kann darüber hinaus weitere Additive und Hilfsstoffe enthalten, wie sie dem Fachmann geläufig sind. Geeignete Additive und Hilfsstoffe sind beispielsweise Lichtschutzmittel z.B. sterisch gehinderte Amine wie HALS (Hindered Amine Light Stabilizers), UV-Absorber, Konservierungsmittel, Pigmente, Verlaufshilfsmittel, Benetzungsadditive, Dispergierhilfsmittel und interne Trennmittel auf Basis von hochmolekularen Polyacrylaten, Metallseifen, Silikonen oder Mineralölen.

Alle verwendeten Additive werden bevorzugt jeweils in Konzentrationen zwischen 0,5 und 2 Gew.-%, besonders bevorzugt zwischen 0,1 und 5 Gew.-%, ganz besonders bevorzugt zwischen 0,2 und 3 Gew.-%, bezogen auf die Gesamtformulierung eingesetzt.

Die Aufgabe der vorliegenden Erfindung wird auch durch ein Verfahren zur Herstellung der erfindungsgemäßen Beschichtungszusammensetzungen gelöst, wobei einer oder mehreren Polyurethandispersionen, welche durch die Polymerisation von NCO-Prepolymeren enthaltend Umsetzungsprodukte aus aliphatischen und/oder cycloaliphatischen Diisocyanaten, Makrodiolen mit einem Molekulargewicht von 500 bis 10000, 2,2-Bis-(hydroxymethyl)-alkan-monocarbonsäuren und kurzkettigen Diolen mit einem Molekulargewicht von 62 bis 400 erhalten werden, ein Neutralisierungsmittel hinzugefügt wird und anschließend bei einer Temperatur zwischen 10 und 30 °C über einen Zeitraum von 5 bis 35 Tagen langsam gerührt wird. Dabei werden erfindungsgemäß Polyurethandispersionen, vorzugsweise wässrige Polyurethandispersionen, eingesetzt, welche einen Neutralisationsgrad im Bereich von 35 bis 65 %, bevorzugt 40 bis 60 %, besonders bevorzugt 45 bis 55 %, bezogen auf alle H-aciden Gruppen der Polyurethandispersion, einen Festkörpergehalt im Bereich von 30 bis 50 Gew.-%, bevorzugt 35 bis 45 Gew.-%, besonders bevorzugt 37 bis 42 Gew.-%, bezogen auf das Gesamtgewicht der Polyurethandispersion, einen pH-Wert im Bereich von 7,1 bis 9,0, bevorzugt 7,5 bis 8,6, besonders bevorzugt 7,8 bis 8,4, eine mittlere Molmasse im Bereich von 20000 bis 58000 g/mol, bevorzugt 25000 bis 45000 g/mol, besonders bevorzugt 27000 bis 37000 g/mol, aufweisen. Weiterhin weisen die erfindungsgemäß eingesetzten Dispersionen eine polymodale Teilchengrößenverteilung auf mit mindestens einem Anteil im Bereich von 50 bis 150 nm, bevorzugt 60 bis 130 nm, besonders bevorzugt 80 bis 110 nm, mindestens einem Anteil im Bereich von 250 bis 600 nm, bevorzugt 300 bis 500 nm, besonders bevorzugt 350 bis 450 nm, und/oder mindestens einem Anteil im Bereich von 1000 bis 3000 nm, bevorzugt 1300 bis 2800 nm, besonders bevorzugt 1500 bis 2500 nm. Bevorzugte Ausführungsformen sind Gegenstand der Unteransprüche oder der Beschreibung.

Erfindungsgemäß bevorzugt ist es, mehrere Polyurethandispersionen, welche unterschiedliche Teilchengrößenverteilungen aufweisen, einzusetzen.

In einer weiteren bevorzugten Ausführungsform der vorliegenden Erfindung wird ein Neutralisierungsmittel eingesetzt, welches ein oder mehrere anorganische, organische Basen oder deren Gemische aufweist. Der Einsatz von salzbildenden Basen kann eine Veränderung des rheologischen Profils der erfindungsgemäßen Beschichtungszusammensetzungen verursachen, daher ist der Einsatz von Aminen besonders bevorzugt, ganz besonders bevorzugt ist der Einsatz von Ammoniak beispielsweise in Form einer wässrigen Lösung.

Es ist erfindungsgemäß bevorzugt das Neutralisierungsmittel in Mengen von 0,01 bis 0,3 mol, bevorzugt 0,02 bis 0,2 mol, besonders bevorzugt 0,025 bis 0,15 mol, bezogen auf die basischen Gruppen des Neutralisierungsmittels pro kg Gesamtformulierung einzusetzen. Bevorzugt weist das Neutralisationsmittel dabei Aminogruppen als basische Gruppen auf.

In einer weiteren bevorzugten Ausführungsform des erfindungsgemäßen Herstellungsverfahrens wird nach Zugabe des Neutralisierungsmittels bei einer Temperatur von 10 bis 20 °C, bevorzugt von 14 bis 18 °C, besonders bevorzugt bei 16 °C, über einen Zeitraum von 25 bis 35 Tagen, bevorzugt von 26 bis 30 Tagen, besonders bevorzugt 28 Tagen, langsam gerührt.

Unter dem Begriff langsam rühren wird im Folgenden verstanden, die Dispersion so zu rühren, dass die gesamte Flüssigkeit ohne Ausbildung einer Trombe bewegt wird. Das Ausschließen der Trombenbildung verhindert das Einziehen von Luft. Luftblasen beeinträchtigen die Ausbildung einer gleichmäßigen Schicht der erfindungsgemäßen Beschichtungszusammensetzung auf der zu beschichtenden Oberfläche.

In einer weiteren bevorzugten Ausführungsform des erfindungsgemäßen Herstellungsverfahrens wird nach Zugabe des Neutralisierungsmittels bei einer Temperatur von 20 bis 30 °C, bevorzugt von 23 bis 27 °C, besonders bevorzugt bei 25 °C, über einen Zeitraum von 10 bis 20 Tagen, bevorzugt von 12 bis 16 Tagen, besonders bevorzugt 14 Tagen, langsam gerührt.

Im erfindungsgemäßen Verfahren werden bevorzugt zusätzlich ein oder mehrere Verdicker eingesetzt ausgewählt aus der Gruppe enthaltend pyrogene Kieselsäuren, natürliche oder synthetische Schichtsilikate, Polysaccharide, Assoziativ-Verdicker und Polyurethanverdicker.

Es ist erfindungsgemäß vorteilhaft weitere Additive und Hilfsstoffe einzusetzen, wie sie dem Fachmann geläufig sind. Geeignete Additive und Hilfsstoffe sind beispielsweise Lichtschutzmittel, UV-Absorber, Konservierungsmittel, Pigmente, Verlaufshilfsmittel, Benetzungsadditive, Dispergierhilfsmittel und interne Trennmittel auf Basis von hochmolekularen Polyacrylaten, Metallseifen, Silikonen oder Mineralölen.

Die Aufgabe der vorliegenden Erfindung wird auch gelöst durch die Verwendung der erfindungsgemäßen Beschichtungszusammensetzung zur Herstellung von Flüssigfolien. Als Flüssigfolie werden üblicherweise Beschichtungen von Oberflächen bezeichnet, welche im flüssigen Zustand auf diese Oberfläche aufgebracht und dort ausgehärtet werden.

Besonders bevorzugt ist die erfindungsgemäße Verwendung zur Herstellung einer Flüssigfolie auf lackierten Oberflächen. Eine weitere bevorzugte Verwendung ist die Herstellung von Flüssigfolie auf Fahrzeugbauteilen, insbesondere auf Karosseriebauteilen.

### Beispiel 1:

100 g handelsübliche Polyurethandispersion (gemäß DE 100 11 277 A1 und DE 196 53 585) wurden mit 0,17 g Ammoniak versetzt und bei einer Temperatur von 16 °C über einen Zeitraum von 28 Tagen langsam, ohne Trombenbildung gerührt. Anschließend wurden 0,5 g Polyurethan-Verdicker und 2,5 g Pigment zugegeben. Die erhaltene Beschichtungszusammensetzung bzw. das Beschichtungsmaterial wurde mittels einer handelsüblichen Applikationsanlage unter Verwendung einer Flow-Coat-Düse wie z.B. von der Firma Nordson bei einem Materialdruck von 8 bar und einer Vorschubgeschwindigkeit der Düse bezogen auf das zu beschichtende Substrat von 0,7 m/s und einer Materialtemperatur von 20 °C auf ein Probeblech appliziert und anschließend ausgehärtet.

### Beispiel 2 (Vergleichsbeispiel) :

100 g handelsübliche Polyurethandispersion (gemäß DE 100 11 277 A1 und DE 196 53 585) wurden mit 0,5 g Polyurethanverdicker und 2,5 g Pigment versetzt. Die erhaltene Beschichtungszusammensetzung bzw. das Beschichtungsmaterial wurde ebenso wie in Beispiel 1 mittels einer handelsüblichen Applikationsanlage unter Verwendung einer Flow-Coat-Düse wie z.B. von der Firma Nordson bei einem Materialdruck von 8 bar und einer vorschubgeschwindigkeit der Düse bezogen auf das zu beschichtende Substrat von 0,7 m/s und einer Materialtemperatur von 20 °C auf ein Probeblech appliziert und anschließend ausgehärtet.

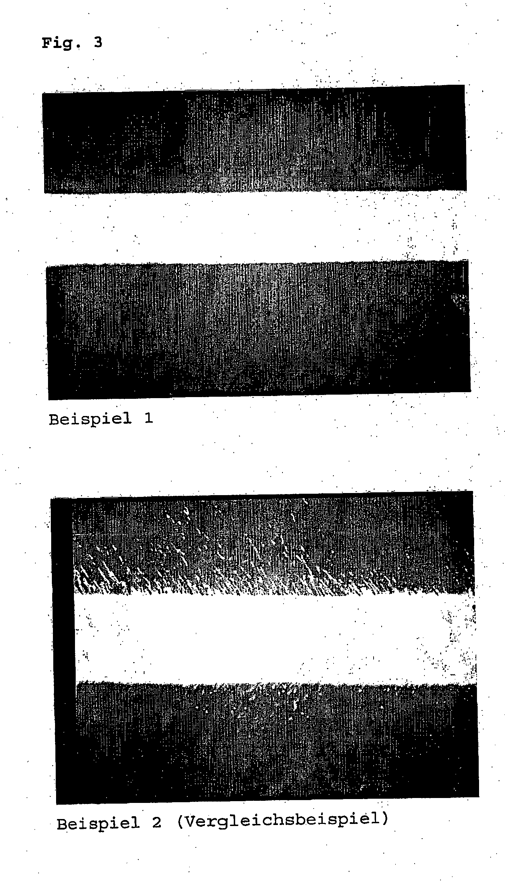

Fig. 3 zeigt das Ergebnis der Applikation. Die erfindungsgemäße Folie zeigt einen deutlich glatteren Kantenverlauf und erheblich weniger Spritzer.

## Patentansprüche

1. Beschichtungszusammensetzung enthaltend eine oder mehrere Polyurethandispersionen herstellbar durch
(a) Vorlegen einer oder mehrerer Polyurethandispersionen, wobei zumindest eine der Polyurethandispersionen
(i) erhalten wird aus der Polymerisierung von NCO-Prepolymeren enthaltend Umsetzungsprodukte aus aliphatischen und/oder cycloaliphatischen Diisocyanaten, Makrodiolen mit einem Molekulargewicht von 500 bis 10000, 2,2-Bis-(hydroxymethyl)-alkan-carbonsäuren und kurzkettigen Diolen mit einem Molekulargewicht von 62 bis 400,
(ii) einen Neutralisationsgrad im Bereich von 35 bis 65 % bezogen auf alle H-aciden Gruppen der Polyurethandispersion aufweist,
(iii) einen Festkörpergehalt im Bereich von 30 bis 50 Gew.-% bezogen auf das Gesamtgewicht der Polyurethandispersion aufweist,
(iv) einen pH-Wert im Bereich von 7,1 bis 9,0 aufweist,
(v) eine mittlere Molmasse im Bereich von 20000 bis 58000 g/mol aufweist und
(vi) eine polymodale Teilchengrößenverteilung mit mindestens einem Anteil im Bereich von 50 bis 150 nm und mindestens einem Anteil im Bereich von 250 bis 600 nm und/oder mindestens einem Anteil im Bereich von 1000 bis 3000 nm aufweist,
(b) Zugabe eines Neutralisierungsmittel in Mengen von 0,01 bis 0,3 mol bezogen auf die basischen Gruppen des Neutralisierungsmittels pro kg Gesamtformulierung und
(c) anschließendes langsames Rühren bei einer Temperatur zwischen 10 und 30 °C über einen Zeitraum von mindestens 5 Tagen, so dass die gesamte Flüssigkeit ohne Ausbildung einer Trombe bewegt wird,
wobei die Beschichtungszusammensetzung ein viskoelastisches Verhalten aufweist, wobei
im Deformationsbereich zwischen γ = 0,05 und γ = 1 die Materialfunktionen des Elastizitätsmoduls G' und des Verlustmoduls G" eine im wesentlichen konstante Steigung aufweisen und
im Deformationsbereich γ > 2 wie Materialfunktionen G' und G" um einen Faktor im Bereich von 2 bis 8 höher liegen als die mit konstanter Steigung der Materialfunktionen G' und G" aus dem Deformationsbereich zwischen γ = 0,05 und γ = 1 in den Deformationsbereich γ > 2 extrapolierten Materialfunktionen G' und G",
und wobei die Beschichtungszusammensetzung im Deformationsbereich zwischen γ = 0,001 und γ = 0,01 einen linear viskoelastischen Bereich aufweist, in welchem die Materialfunktion des Elastizitätsmoduls G' doppelt so große Werte aufweist wie die Materialfunktion des Verlustmoduls G", und
im Deformationsbereich zwischen γ = 0,05 und y = 0,5 einen nicht linear viskoelastischen Bereich aufweist, in welchem sich die Materialfunktionen G' und G" in einem Bereich zwischen 50 bis 500 Pa schneiden.

2. Beschichtungszusammensetzung nach Anspruch 1, **dadurch gekennzeichnet, dass** die polyurethandispersion eine mittlere Molmasse im Bereich von 25000 bis 45000 g/mol, bevorzugt 27000 bis 37000 g/mol, aufweist.

3. Beschichtungszusammensetzung nach einem der Ansprüche 1 oder 2, **dadurch gekennzeichnet, dass** die Polyurethandispersion eine polymodale Teilchengrößenverteilung aufweist mit mindestens einem Anteil im Bereich von 60 bis 130 nm, bevorzugt 80 bis 110 nm, mindestens einem Anteil im Bereich von 300 bis 500 nm, bevorzugt 350 bis 450 nm, und/oder mindestens einem Anteil im Bereich von 1300 bis 2800 nm, bevorzugt 1500 bis 2500 nm.

4. Beschichtungszusammensetzung nach einem der voranstehenden Ansprüche, **dadurch gekennzeichnet, dass** die Beschichtungszusammensetzung mindestens einen Verdicker aufweist ausgewählt aus der Gruppe enthaltend Polyurethanverdicker, pyrogene Kieselsäuren, natürliche und synthetische Schichtsilikate, Polysaccharide und Assoziativ-Verdicker.

5. Beschichtungszusammensetzung nach einem der voranstehenden Ansprüche, **dadurch gekennzeichnet, dass** die Polyurethandispersionen als Dispersionsmittel Wasser enthalten.

6. Beschichtungszusammensetzung nach einem der voranstehenden Ansprüche, **dadurch gekennzeichnet, dass** die Beschichtungszusammensetzung ein oder mehrere weitere Stoffe aufweist gewählt aus der Gruppe enthaltend Lichtschutzmittel, UV-Absorber, Konservierungsmittel, Pigmente, Verlaufshilfsmittel, Benetzungsadditive, Dispergierhilfsmittel und Trennmittel.

7. Verfahren zur Herstellung der Beschichtungszusammensetzung nach einem der Ansprüche 1 bis 6 aufweisend die Schritte
(a) Vorlegen einer oder mehrerer Polyurethandispersionen, wobei zumindest eine der Polyurethandispersionen
(i) erhalten wird aus der Polyinerisierung von NCO-Prepolymeren enthaltend Umsetzungsprodukte aus aliphatischen und/oder cycloaliphatischen Diisocyanaten, Makrodiolen mit einem Molekulargewicht von 500 bis 10000, 2,2-Bis-(hydroxymethyl)-alkan-car-bonsäuren und kurzkettigen Diolen mit einem Molekulargewicht von 62 bis 400,
(ii) einen Neutralisationsgrad im Bereich von 35 bis 65 % bezogen auf alle H-aciden Gruppen der Polyurethandispersion aufweist,
(iii) einen Festkörpergehalt im Bereich von 30 bis 50 Gew.-% bezogen auf das Gesamtgewicht der Polyurethandispersion aufweist,
(iv) einen pH-Wert im Bereich von 7,1 bis 9,0 aufweist,
(v) eine mittlere Molmasse im Bereich von 20000 bis 58000 g/mol und
(vi) eine polymodale Teilchengrößenverteilung mit mindestens einem Anteil im Bereich von 50 bis 150 nm, mindestens einem Anteil im Bereich von 250 bis 600 nm und/oder mindestens einem Anteil im Bereich von 1000 bis 3000 nm aufweist,
(b) Zugabe eines Neutralisierungsmittels in Mengen von 0,01 bis 0,3 mol bezogen auf die basischen Gruppen des Neutralisierungsmittels pro kg Gesamtformulierung und
(c) anschließendes langsames Rühren bei einer Temperatur zwischen 10 und 30 °C über einen Zeitraum von mindestens 5 Tagen, so dass die gesamte Flüssigkeit ohne Ausbildung einer Trombe bewegt wird.

8. Verfahren nach Anspruch 7, **dadurch gekennzeichnet, dass** über einen Zeitraum von 5 bis 35 Tagen, bevorzugt 8 bis 30 Tagen, gerührt wird.

9. Verfahren nach einem der Ansprüche 7 oder 8, **dadurch gekennzeichnet, dass** ein oder mehrere, weitere Stoffe zugegeben werden gewählt aus der Gruppe enthaltend Verdicker, Lichtschutzmittel, UV-Absorber, Konservierungsmittel, Pigmente, Verlaufshilfsmittel, Benetzungsadditive, Dispergierhilfsmittel und Trennmittel.

10. Verfahren nach einem der Ansprüche 7 bis 9, **dadurch gekennzeichnet**, dans eine Polyurethandispersion eingesetzt wird, welche eine mittlere Molmasse im Bereich von 25000 bis 45000 g/mol, bevorzugt 27000 bis 37000 g/mol, aufweist.

11. Verfahren nach einem der Ansprüche 7 bis 10, **dadurch gekennzeichnet, dass** eine Polyurethandispersion eingesetzt wird, welche eine polymodale Teilchengrößenverteilung aufweist mit mindestens einem Anteil im Bereich von 60 bis 130 nm, bevorzugt 80 bis 110 nm, mindestens einem Anteil im Bereich von 300 bis 500 nm, bevorzugt 350 bis 450 nm, und/oder mindestens einem Anteil im Bereich von 1300 bis 2800 nm, bevorzugt 1500 bis 2500 nm.

12. Verfahren nach einem der Ansprüche 7 bis 11, **dadurch gekennzeichnet, dass** wässrige Polyurethandispersionen eingesetzt werden.

13. Verfahren nach einem der Ansprüche 7 bis 12, **dadurch gekennzeichnet, dass** ein Neutralisierungsmittel eingesetzt wird, welches ein oder mehrere organische und/oder anorganische Basen enthält.

14. Verfahren nach Anspruch 13, **dadurch gekennzeichnet, dass** ein Neutralisierungsmittel eingesetzt wird, welches Ammoniak enthält.

15. Verfahren nach Anspruch 13 oder 14, **dadurch gekennzeichnet, dass** das Neutralisierungsmittel in Mengen von 0,02 bis 0,2 mol, bevorzugt 0,025 bis 0,15 mol, bezogen auf die basischen Gruppen des Neutralisierungsmittels pro kg Gesamtformulierung eingesetzt wird.

16. Verfahren nach einem der Ansprüche 7 bis 15, **dadurch gekennzeichnet, dass** bei einer Temperatur von 10 bis 20 °C, bevorzugt 14 bis 18 °C, über einen Zeitraum von 25 bis 35 Tagen, bevorzugt 26 bis 30 Tagen, langsam gerührt wird.

17. Verfahren nach einem der Ansprüche 7 bis 15, **dadurch gekennzeichnet, dass** bei einer Temperatur von 20 bis 30 °C, bevorzugt 23 bis 27 °C, über einen Zeitraum von 10 bis 20 Tagen, bevorzugt 12 bis 16 Tagen, langsam gerührt wird.

18. Verwendung der Beschichtungszusammensetzung nach einem der Ansprüche 1 bis 6 zur Herstellung einer Flüssigfolie.

19. Verwendung nach Anspruch 18, **dadurch gekennzeichnet, dass** die Flüssigfolie auf lackierten Oberflächen hergestellt wird.

20. Verwendung nach Anspruch 18 oder 19, **dadurch gekennzeichnet, dass** die Flüssigfolie auf Fahrzeugkarosseriebauteilen hergestellt wird.

## Claims

1. A coating compound comprising one or several polyurethane dispersions which can be produced by
(a) providing one or several polyurethane dispersions, while at least one of the polyurethane dispersions
(i) is obtained from the polymerization of NCO-prepolymers containing reaction products of aliphatic and/or cycloaliphatic diisocyanates, macrodiols with a molecular weight of 500 to 10000, 2,2-bis-(hydroxymethyl)- alkan carbonic acids and short-chain diols with a molecular weight of 62 to 400,
(ii) exhibits a neutralisation degree in the region of 35 to 65% relating to all H-acid groups of the polyurethane dispersion,
(iii) has a solid content in the region of 30 to 50 % in weight relating to the whole weight of the polyurethane dispersion,
(iv) has a pH-value in the region of 7.1 to 9.0,
(v) has an average molar mass in the region of 20000 to 58000 g/mol and
(vi) a polymodal particle size distribution with at least one portion in the region of 50 to 150 nm and at least one portion in the region of 250 to 600 nm and/or at least one portion in the region of 1000 to 3000 nm,
(b) adding of a neutralizing agent in amounts from 0.01 to 0.3 mol relating to the basic groups of the neutralising agent per kg of the total formulation and
(c) subsequent slow stirring at a temperature between 10 and 30°C over a period of at least 5 days, at which the whole liquid is moved without forming a vortex, whereas the coating compound has a visco-elastic behaviour, whereas
in the deformation range between γ = 0.05 and γ = 1 the material functions of the elasticity modulus G' and of the loss modulus G" have an essentially constant gradient and in the deformation range γ > 2 the material functions G' and G" are higher than the material functions G' and G" extrapolated with a constant gradient of the material functions G' and G" from the deformation range between γ = 0.05 and γ = 1 in the deformation range γ > 2, by a factor of 2 to 8,
and whereas the coating compound has a linear visco-elastic range in the deformation range between γ = 0.001 and γ = 0.01,
in which the material function of the elasticity modulus G' has values twice as big as the material function of the loss modulus G", and
has in the deformation range between γ = 0.05 and γ = 0.5 a nonlinear visco-elastic range in which the material functions G' and G" intersect in a range between 50 to 500 Pas.

2. The coating compound according to claim 1, **characterised in that** the polyurethane dispersion has an average molar mass in the range of 25000 to 45000 g/mol, preferably 27000 to 37000 g/mol.

3. The coating compound according to one of the claims 1 or 2, **characterised in that** the polyurethane dispersion has a polymodal particle size distribution with at least one portion in the region of 60 to 130 nm, preferably 80 to 110 nm, at least one portion in the region of 300 to 500 nm, preferably 350 to 450 nm, and/or at least one portion in the region of 1300 to 2800 nm, preferably 1500 to 2500 nm.

4. The coating compound according to one of the previous claims, **characterised in that** the coating compound includes at least one thickener selected from the group containing polyurethane thickeners, fumed silicae, natural and synthetic colamellar silicates, polysaccharides and associative thickeners.

5. The coating compound according to one of the previous claims, **characterised in that** the polyurethane dispersions contain water as a dispersion agent.

6. The coating compound according to one of the previous claims, **characterised in that** the coating compound has one or several additional substances selected from the group containing light stabilisers, UV-absorbers, preservation agents, pigments, flow control agents, wetting agents, cross-linking additives, dispersion additives and release agents.

7. A method for producing the coating compound according to one of the claims 1 to 6 comprising the following steps
(a) providing one or several polyurethane dispersions, whereas at least one of the polyurethane dispersions
(i) is obtained from the polymerisation of NCO-prepolymers containing reaction products of aliphatic and/or cycloaliphatic diisocyanates, macrodiols with a molecular weight of 500 to 10000, 2,2-bis-(hydroxymethyl)-alkan-carbonic acids and short-chain diols with a molecular weight of 62 to 400,
(ii) has a neutralisation degree in the region of 35 to 65% relating to all H-acid groups of the polyurethane dispersion,
(iii) has a solid content in the region of 30 to 50 % in weight relating to the whole weight of the polyurethane dispersion,
(iv) has a pH-value in the range of 7.1 to 9.0,
(v) has an average molar mass in the region of 20000 to 58000 g/mol and
(vi) a polymodal particle size distribution with at least one portion in the region of 50 to 150 nm, at least one portion in the region of 250 to 600 nm and/or at least one portion in the region of 1000 to 3000 nm,
(b) addition of a neutralising agent in amounts from 0.01 to 0.3 mol relating to the basic groups of the neutralising agent per kg of the total formulation and
(c) subsequent slow stirring at a temperature between 10 and 30 °C over a period of at least 5 days, at which the whole liquid is moved without forming a vortex.

8. The method of claim 7, **characterised in that** the stirring is performed over a period of 5 to 35 days, preferably 8 to 30 days.

9. The method according to one of the claims 7 or 8, **characterised in that** one or several substances are added, selected from the group containing thickeners, light stabilisers, UV-absorbers, preservation agents, pigments, flow control agents, wetting agents, cross-linking additives, dispersion additives and release agents.

10. The method according to one of the claims 7 to 9, **characterised in that** a polyurethane dispersion is used, with an average molar mass in the range of 25000 to 45000 g/mol, preferably 27000 to 37000 g/mol.

11. The method according to any of the claims 7 to 10, **characterised in that** a polyurethane dispersion is used, which has a polymodal particle size distribution with at least one portion in the region of 60 to 130 nm, preferably 80 to 110 nm, at least one portion in the region of 300 to 500 nm, preferably 350 to 450 nm, and/or at least one portion in the region of 1300 to 2800 nm, preferably 1500 to 2500 nm.

12. The method according to any of the claims 7 to 11, **characterised in that** aqueous polyurethane dispersions are used.

13. The method according to any of the claims 7 to 12, **characterised in that** a neutralising agent is used, which contains one or several organic and/or anorganic bases.

14. The method according to claim 13, **characterised in that** a neutralising agent is used which contains ammoniac.

15. The method according to claim 13 or 14, characterised that the neutralising agent is used in amounts of 0.02 to 0.2 mol, preferably 0.025 to 0.15 mol, relating to the basic groups of the neutralising agent per kg of the total formulation.

16. The method according to any of the claims 7 to 15, **characterised in that** the stirring takes place slowly at a temperature of 10 to 20°C, preferably 14 to 18°C, over a period of 25 to 35 days, preferably 26 to 30 days.

17. The method according to any of the claims 7 to 15, **characterised in that** the stirring takes place slowly at a temperature of 20 to 30°C, preferably 23 to 27°C, over a period of 10 to 20 days, preferably 12 to 16 days.

18. Use of the coating compound according to one of the claims 1 to 6 for producing a liquid film.

19. The use according to claim 18, **characterised in that** the liquid film is formed on varnished surfaces.

20. The use according to claim 18 or 19, **characterised in that** the liquid film is formed on vehicle body parts.

## Revendications

1. Composé de revêtement comprenant une ou plusieurs dispersions de polyuréthane qui peuvent être produits par
(a) l'application d'une ou plusieurs dispersions de polyuréthane, tandis qu'au moins l'une des dispersions de polyuréthane
(ii) présente un degré de neutralisation dans la fourchette de 35 à 65% par rapport à tous les groupes H-acides de la dispersion de polyuréthanne,
(iii) a une teneur en corps solides dans la fourchette de 30 à 50% en poids de 30 à 50 % par rapport au poids total de la dispersion de polyuréthane,
(iv) a une valeur pH dans la fourchette de 7,1 à 9,0,
(v) a une masse molaire moyenne dans la fourchette de 20000 to 58000 g/mol et
(vi) une distribution polymodale de tailles de particules avec au moins une partie dans la fourchette de 50 à 150 nm et au moins une partie dans la fourchette de 250 à 600 nm et/ou au moins une partie dans la fourchette de 1000 à 3000 nm,
(b) l'addition d'un agent neutralisant dans des quantités de 0,01 à 0,3 mole par rapport aux groupes de base de l'agent de neutralisation par kg de la formulation totale et
(c) l'agitation lente subséquente à une température comprise entre 10 et 30 °C sur une période d'au moins 5 jours, au cours de laquelle l'ensemble du liquide est déplacé sans former de vortex,
tandis que le composé de revêtement a un comportement viscoélastique, alors que
dans la fourchette de déformation comprise entre γ = 0,05 et γ = 1 les fonctions matérielles du module d'élasticité G' et du module de perte G" ont une hauteur sensiblement constante et
dans la fourchette de déformation γ > 2 les fonctions matérielles G' et G" sont plus élevées que les fonctions matérielles G' et G" extrapolées avec un pas constant des fonctions matérielles G' et G" de la fourchette de déformation entre γ = 0,05 et γ = 1 dans la fourchette de déformation γ > 2, d'un facteur de 2 à 8,
et alors que le composé de revêtement a une viscoélastique gamme linéaire dans la fourchette déformation comprise entre γ = 0,001 et γ = 0,01,
dans lequel la fonction matérielle du module d'élasticité G' a des valeurs du double de la fonction matérielle du module de perte G", et
présente dans la fourchette de déformation comprise entre γ = 0,05 et γ = 0,5 une fourchette viscoélastique non linéaire dans laquelle les fonctions matérielles G' et G" se coupent dans une fourchette comprise entre 50 à 500 Pas

2. Composé de revêtement selon la revendication 1, **caractérisé en ce que** la dispersion de polyuréthanne a une masse molaire moyenne comprise dans la fourchette de 25000 à 45000 g/mol, de préférence de 27000 à 37000 g/mol.

3. Composé de revêtement selon l'une des revendications 1 ou 2, **caractérisé en ce que** la dispersion de polyuréthane a une distribution de taille de particule polymodale avec au moins une partie dans la fourchette de 60 à 130 nm, de préférence de 80 à 110 nm, au moins une partie dans la fourchette allant de 300 à 500 nm, de préférence de 350 à 450 nm, et/ou au moins une partie dans la fourchette allant de 1300 à 2800 nm, de préférence de 1500 à 2500 nm.

4. Composé de revêtement selon l'une quelconque des revendications précédentes, **caractérisé en ce que** le composé de revêtement comprend au moins un agent épaississant choisi dans le groupe contenant les épaississants de polyuréthanne, les silices fumées, les silicates colamellaires naturels et synthétiques, les polysaccharides et les épaississants associatifs.

5. Composé de revêtement selon l'une quelconque des revendications précédentes, **caractérisé en ce que** les dispersions de polyuréthane contiennent de l'eau comme agent de dispersion.

6. Composé de revêtement selon l'une quelconque des revendications précédentes, **caractérisé en ce que** le composé de revêtement comporte une ou plusieurs substances supplémentaires choisies dans le groupe contenant des stabilisants à la lumière, des absorbeurs d'UV, des agents de conservation, des pigments, des agents mouillants, des additifs de réticulation, des additifs de dispersion et des agents de démoulage.

7. Procédé de production du composé de revêtement selon l'une quelconque des revendications 1 à 6, comprenant les phases suivantes
(a) l'application d'une ou plusieurs dispersions de polyuréthanne, tandis qu'au moins l'une des dispersions de polyuréthane
(i) est obtenue à partir de la polymérisation de prépolymères NCO contenant des produits de réaction de diisocyanates aliphatiques et/ou cycloaliphatiques, des macrodiols ayant un poids moléculaire de 500 à 10000, des acides carboniques 2,2-bis- (hydroxyméthyle)-alkane et des diols à courte chaîne ayant un poids moléculaire de 62 à 400,
(ii) présente un degré de neutralisation dans la fourchette de 35 à 65% par rapport à tous les groupes H-acides de la dispersion de polyuréthane,
(iii) a une teneur en corps solides dans la fourchette de 30 à 50% en poids de 30 à 50 % par rapport au poids total de la dispersion de polyuréthane,
(iv) a une valeur pH comprise dans a fourchette de 7,1 à 9,0,
(v) a une masse molaire moyenne dans la fourchette de 20000 to 58000 g/mol et
(vi) une distribution polymodale de tailles de particules avec au moins une partie dans la fourchette de 50 à 150 nm et au moins une partie dans la fourchette de 250 à 600 nm et/ou au moins une partie dans la fourchette de 1000 à 3000 nm,
(b) l'addition d'un agent neutralisant dans des quantités de 0,01 à 0,3 mole par rapport aux groupes de base de l'agent de neutralisation par kg de la formulation totale et
(c) l'agitation lente subséquente à une température comprise entre 10 et 30°C sur une période d'au moins 5 jours, au cours de laquelle l'ensemble du liquide est déplacé sans former de vortex.

8. Procédé selon la revendication 7, **caractérisé en ce que** l'agitation est réalisée sur une période de 5 à 35 jours, de préférence 8 à 30 jours.

9. Procédé selon l'une des revendications 7 ou 8, **caractérisé en ce que** l'on ajoute une ou plusieurs substances, choisies dans le groupe contenant des épaississants, des stabilisants à la lumière, des absorbeurs d'UV, des agents de conservation, des pigments, des agents mouillants, des additifs de réticulation, des additifs de dispersion et des agents de démoulage.

10. Procédé selon l'une des revendications 7 à 9, **caractérisé en ce que** l'on utilise une dispersion de polyuréthane, avec une masse molaire moyenne comprise dans la fourchette de 25000 à 45000 g/mol, de préférence de 27000 à 37000 g/mol.

11. Procédé selon l'une des revendications 7 à 10, **caractérisé en ce que** l'on utilise une dispersion de polyuréthane ayant une distribution de taille de particule polymodale avec au moins une partie dans la fourchette de 60 à 130 nm, de préférence de 80 à 110 nm, au moins une partie dans la fourchette allant de 300 à 500 nm, de préférence de 350 à 450 nm, et/ou au moins une partie dans la fourchette allant de 1300 à 2800 nm, de préférence de 1500 à 2500 nm.

12. Procédé selon l'une des revendications 7 à 11, **caractérisé en ce que** des dispersions aqueuses de polyuréthane sont utilisées.

13. Procédé selon l'une des revendications 7 à 12, **caractérisé en ce que** l'on utilise un agent neutralisant, qui contient une ou plusieurs bases organiques et/ou anorganiques.

14. Procédé selon la revendication 13, **caractérisé en ce que** l'on utilise un agent neutralisant qui contient de l'ammoniac.

15. Procédé selon les revendications 13 ou 14, caractérisé ce que l'agent neutralisant est utilisé dans des quantités de 0,02 à 0,2 mole, de préférence de 0,025 à 0,15 mole, par rapport aux groupes de base de l'agent de neutralisation par kg de la formulation totale.

16. Procédé selon l'une des revendications 7 à 15, **caractérisé en ce que** l'agitation a lieu lentement à une température de 10 à 20°C, de préférence de 14 à 18°C, sur une période de 25 à 35 jours, de préférence 26 30 jours.

17. Procédé selon l'une des revendications 7 à 15, **caractérisé en ce que** l'agitation a lieu lentement à une température de 20 à 30°C, de préférence de 23 à 27°C, sur une période de 10 à 20 jours, de préférence 12 à 16 jours.

18. Utilisation de composé de revêtement selon l'une quelconque des revendications 1 à 6 pour la production d'un film liquide.

19. Utilisation selon la revendication 18, **caractérisée en ce que** le film liquide est formé sur des surfaces vernies.

20. Utilisation selon les revendications 18 ou 19, **caractérisé en ce que** le film liquide est formé sur des parties de carrosserie de véhicules automobiles.
